# EUROPÄISCHE PATENTSCHRIFT

(11) **EP 1 623 363 B1**
(45) Veröffentlichungstag und Bekanntmachung des Hinweises auf die Patenterteilung: **20.06.2007**
(21) Anmeldenummer: 04722830.9
(22) Anmeldetag: 24.03.2004
(51) Int. Cl.: G06K 13/08, G06K 7/00

(54) **KARTENLESEGERÄT**
CARD READING DEVICE
LECTEUR DE CARTES

(30) Priorität: 12.05.2003 DE 10321231
(43) Veröffentlichungstag der Anmeldung: 08.02.2006
(73) Patentinhaber: SIEMENS AKTIENGESELLSCHAFT, 80333 München (DE)
(72) Erfinder: RIESTER, Thomas, 78052 Villingen-Schwenningen (DE); WAHLER, Torsten, 78073 Bad Dürrheim (DE)
(86) Internationale Anmeldenummer: PCT/EP2004/003121
(87) Internationale Veröffentlichungsnummer: WO 2004/100056

(56) Entgegenhaltungen:
- EP-A- 0 351 103
- EP-A- 0 468 145
- EP-A- 0 704 813
- GB-A- 2 198 595

## Beschreibung

Die Erfindung betrifft ein Verfahren zum Transport einer Karte in einem Kartenlesegerät, bei welchem die Karte beim Einschieben durch eine Einschuböffnung in das Kartenlesegerät in einem Mitnehmer gleitet, der Mitnehmer sich in dem Kartenlesegerät in Einschubrichtung bewegt, der Mitnehmer die Karte bei der Bewegung in Einschubrichtung mittels eines auf einer ersten Flachseite der Karte bei Klemmung anliegenden oberen Klemmteils und eines auf der einer zweiten Flachseite der Karte bei Klemmung anliegenden unteren Klemmteil zumindest teilweise einklemmt, eine Führung mit einem ersten Führungselement, welches mit dem Kontaktsatz starr verbunden ist im Zusammenwirken mit einem zweiten Führungselement an dem Mitnehmer, welches mit dem ersten Führungselement korrespondiert, den Mitnehmer im Abstandsrichtung zu den Kontakten des Kontaktsatzes bei Bewegung in Einschubrichtung führt und die Karte mit Kontakten eines Kontaktsatzes kontaktiert wird.

Moderne Fahrtschreiber benutzen statt der bisher verwendeten Diagrammscheibe zum Registrieren der Fahr- und Pausenzeiten und der fahrzeugspezifischen Daten eine Chipkarte, auf der sämtliche Informationen zumindest teilweise veränderbar gespeichert sind und werden daher auch als digitale Tachografen bezeichnet. Einschlägige Standards schreiben das Format der benutzten Karten und die Funktionsweise der Lese- bzw. Schreibgeräte hinsichtlich verschiedener Aspekte vor. Diese Vorschriften dienen in erster Linie dem Schutz vor in betrügerischer Absicht vorgenommenen Manipulationen, der Sicherstellung der Funktion und der Kompatibilität der benutzten Lese- und Schreibvorrichtungen und Karten. An die Einhaltung der Vorschriften ist auf Grund des rechtlich relevanten Nachweischarakters der auf der Karte abgelegten Daten ein besonders strenger Maßstab zu legen. Als für die Erfindung relevante Beispiele konstruktiver Vorschriften sei für das Kartenlesegerät das Verschließen des Gerätes während der Informationsübertragung zwischen der Karte und der Vorrichtung zur Vermeidung von Manipulationen und hinsichtlich der verwendeten Karten die elektrische Kontaktierung genannt. Neben den rechtlichen Vorschriften muss eine derartige Vorrichtung aber auch zahlreiche weitere konstruktive Anforderungen erfüllen. Für den Einbau in ein Fahrzeugcockpit ist eine äußerst flache Bauweise des Kartenlesegerätes aus Platzgründen anzustreben. Des Weiteren muss die Funktion der Vorrichtung beständig gegenüber Erschütterungen und weitreichenden Temperaturänderungen sein. Daneben sollte die Vorrichtung unempfindlich gegenüber Verschmutzungen, insbesondere Verschmutzungen durch aggressive Medien, beispielsweise Dieselkraftstoff, sein.

Eine Vorrichtung der oben genannten Art, welche den rechtlichen und konstruktiven Vorschriften weitestgehend genügt, ist bereits aus der deutschen Patentanmeldung DE 197 32 583 bekannt. In dieser Schrift wird vorgeschlagen, eine Datenkarte unter seitlicher Führung mittels motorisch angetriebener Transportrollen automatisch in das Kartenlesegerät einzuziehen, wobei Andruckelemente den Transportrollen als Gegenlager dienen und ein federnd gelagertes Verschlusselement die Vorrichtung während der Lese- und Schreibvorgänge verschließt.

Die dringend erforderliche flache Bauweise dieser Geräte bedingt, dass die zu einem Kontaktsatz zusammengefassten Kontakte in dem Gerät starr angeordnet werden müssen und nicht als kontrolliert auf die Karte abzusenkende Bauteile ausgeführt werden können. Eine Verfahrbarkeit des Kontaktsatzes in Abstandsrichtung zu der Karte stünde der flachen Bauweise entgegen und ginge darüber hinaus schon allein wegen der erforderlichen flexiblen Leiterverbindung zwischen dem Kontaktsatz und der Leiterplatte mit unakzeptabel hohen Herstellungskosten einher. Bei der bekannten Ausführung zeigt sich, dass sich die erforderliche Präzision der Positionierung der Kontakte des Kontaktsatzes auf Grund der Toleranzgüten der beteiligten Bauteile kaum verwirklichen lässt und es so zu unbedingt zu vermeidenden Schwierigkeiten bei der Kontaktierung zwischen dem Kartenlesegerät und der Karte kommt. Der kurze Federweg der Kontakte in dem Kontaktsatz reicht im ungünstigen Fall nicht aus, die Ungenauigkeiten in der Dicke der Karte, der Durchbiegung der Leiterplatte und der übrigen Bauteile auszugleichen.

Aus der britischen Patentanmeldung GB 298 595 A und der europäischen Patentanmeldung EP 0 351 103 A1 sind bereits Kartenlesegeräte bekannt, die eine Klemmung der eingegebenen Karte vorsehen. Eine fehlerhafte Eingabe kann bei diesen Geräten, ebenso wie bei der in der europäischen Patentanmeldung EP 0 468 145 A1 vorgeschlagenen Anordnung, zu einer Störung der Kontaktierung führen.

Ausgehend von den Problemen des Standes der Technik hat es sich die Erfindung zur Aufgabe gemacht, ein Verfahren zu schaffen, welches die zuvor erläuterten geltenden rechtlichen Vorschriften erfüllt, den konstruktiven Randbedingungen gerecht wird, den Komfort eines automatischen Karteneinzugs bereitstellt und stets eine sichere Kontaktierung zwischen dem Kontaktsatz des Kartenlesegeräts und der Karte gewährleistet.

Zur Lösung der Aufgabe wird erfindungsgemäß ein Verfahren nach Anspruch 1 vorgeschlagen.

Erfindungsgemäß wird ein Verfahren zum Transport einer Karte in einem Kartenlesegerät vorgeschlagen, bei welchem die Karte beim Einschieben durch eine Einschuböffnung in das Kartenlesegerät in einen Mitnehmer gleitet, ein Antriebe den Mitnehmer in dem Kartenlesegerät in Einschubrichtung bewegt, der Mitnehmer die Karte bei der Bewegung in Einschubrichtung mittels eines auf einer ersten Flachseite der Karte bei Klemmung anliegenden oberen Klemmteils und eines auf der zweiten Flachseite der Karte bei Klemmung anliegenden unteren Klemmteils zumindest zeitweise einklemmt, eine Führung mit einem ersten Führungselement, welches mit dem Kontaktsatz starr verbunden ist, im Zusammenwirken mit einem zweiten Führungselement an dem Mitnehmer, welches mit dem ersten Führungselement korrespondiert, den Mitnehmer in Abstandsrichtung zu den Kontakten des Kontaktsatzes bei Bewegung in Einschubrichtung führt, die Karte mit Kontakten eines Kontaktsatzes kontaktiert wird.

Das erfindungsgemäße Verfahrens zum Transport einer Karte in einem Kartenlesegerät sieht vor, dass die Klemmung der Karte mittels des Mitnehmers vor dem Kontaktieren der Karte mit den Kontakten gelöst wird, ein Verschließmodul die Einschuböffnung mittels eines Verschlusses verschließt und das Verschließmodul die Karte an einer Schmalkante berührt und in die Ausleseposition schiebt. Das Verschließmodul kann die Karte vorteilhaft an der dem Verschließmodul zugewandten Schmalkante berühren und in die Ausleseposition schieben. Auch ein zangenartiges Greifen des Verschließmoduls an zwei sich gegenüberliegenden Schmalkanten der Karte und ein anschließendes Schieben der Karte in die Ausleseposition ist denkbar. Das Lösen der Klemmung vor dem Erreichen der Endposition beziehungsweise vor dem Auslesevorgang des Mitnehmers ist vor allem deshalb zweckmäßig, weil Ungenauigkeiten beim händischen Einschieben sich auf die Position der Karte in dem Mitnehmer auswirken können und auf diese Weise die korrekte Positionierung der Karte relativ zu den Kontakten des Kontaktsatzes möglicherweise nicht gewährleistet werden kann.

Neben diesen Vorteilen hat das erfindungsgemäße Verfahren den Vorzug einer minimalen Zugriffszeit, da das Anpressen der Karte an den Kontaktsatz gleichzeitig mit dem Einzug der Karte erfolgt und so kein zeitlicher Mehraufwand für die Kontaktierung entsteht, wie beispielsweise bei raumgreifenden Lösungen des Standes der Technik, welche ein Absenken des Kontaktsatzes auf die Karte vorsehen.

Eine vorteilhafte Weiterbildung eines Kartenlesegeräts sieht vor, dass der Kontaktsatz einen Rahmen aufweist, welcher mit mindestens einem ersten Führungselement versehen ist. Dieser Rahmen kann als Kunststoff-Spritzgussteil oder auch als Blechbauteil ausgebildet sein. In beiden Fällen ist es zweckmäßig, wenn zwischen dem Rahmen und dem Kontaktsatz eine starre und unlösbare Verbindung besteht. Im Falle des Kunststoff-Spritzgussteils ist es daher sinnvoll, wenn der Rahmen direkt an den Kontaktsatz angegossen bzw. gespritzt ist. In beiden Fällen ist es sinnvoll, wenn der Kontaktsatz einstückig mit dem Rahmen ausgebildet ist, da auf diese Weise Ungenauigkeiten in der Lage des Kontaktsatzes auf Grund eines zusätzlichen Montageschrittes vermieden werden und daneben auch die Anzahl der Bauteile verringert ist, woraus sich erhebliche Kosteneinsparungen ergeben. Eine zuverlässige Funktionsweise wurde erzielt, wenn das erste Führungselement mindestens eine erste Gleitfläche aufweist, welche an dem zweiten Führungselement in der Art eines Gleitlagers beweglich gelagert ist. Diese Vorteile kommen vor allem dann zum Tragen, wenn das zweite Führungselement mindestens eine zweite Gleitfläche aufweist, welche mit der ersten Gleitfläche des ersten Führungselements bei einer Bewegung des Mitnehmers in Einschubrichtung kulissenartig zusammenwirkt. Die Ausbildung als Gleitlager erweist sich auf Grund der reproduzierbar niedrigen Lagerkräfte in Kombination mit einem automatischen Einzug als zweckmäßig.

Eine besonders flache Bauweise eines Kartenlesegerätes wird möglich, wenn der Mitnehmer mindestens ein auf einer ersten Flachseite der Karte bei Klemmung anliegendes oberes Klemmteil aufweist und ein auf einer zweiten Flachseite der Karte bei Klemmung anliegendes unteres Klemmteil aufweist, und das obere Klemmteil im Zusammenwirken mit dem unteren Klemmteil die Karte bei Bewegung in Einschubrichtung zumindest zeitweise einklemmt. Der aus dem Stand der Technik bekannte Fördermechanismus transportiert die Karte mittels Walzen in die Ausleseposition. Die flache Bauweise bedingt jedoch einen geringen Durchmesser der Walzen, so dass es häufig zu Verkantungen kommen kann. Daneben weisen die Transportwalzen nicht das erforderliche Maß an Robustizität auf, da sie ständig mit der händisch, also weitestgehend unkontrolliert eingesteckten Karte kollidieren. Damit es überhaupt zu einem Transport der Karte auf Grund der Rotationsbewegung der Walzen kommen kann, müssen die Walzen ein Mindestmaß an elastischer Verformung aufweisen, was einem geringen Walzendurchmesser zuwiderläuft. Darüber hinaus neigt ein besonders weiches Walzenmaterial zu hohem Verschleiß. Das erfindungsgemäße Kartenlesegerät überkommt diese Probleme, indem ein Mitnehmer die Karte zwischen zwei Klemmteilen einklemmt und der Mitnehmer mitsamt der Karte in Einschubrichtung motorisch angetrieben bewegt wird und gleichzeitig der Mitnehmer entlang einer kulissenartigen Führung kontrolliert in Abstandsrichtung zu den Kontakten des Kontaktsatzes bewegt wird.

Als zweckmäßige Maßnahme hat es sich erwiesen, wenn der Kontaktsatz an einer Leiterplatte befestigt und an der Leiterplatte elektrisch kontaktiert ist. Besonders kostengünstig ist eine Befestigung des Kontaktsatzes an der Leiterplatte mittels der elektrischen Kontakte. Ahnliche Kostenvorteile ergeben sich, wenn neben den elektrischen Kontakten zusätzlich der gemäß einer vorteilhaften Ausgestaltung an den Kontaktsatz angebrachte Rahmen an der Leiterplatte befestigt ist. Diese Befestigung kann vorteilhaft mittels Klipsverbindungen erfolgen.

Im Folgenden ist ein Ausführungsbeispiel der Erfindung zur Verdeutlichung unter Bezugnahme auf Zeichnungen näher beschrieben. Es zeigen:
- Figur 1 bis 4:: einen Schnitt jeweils gemäß Schnitt A-A der Figuren 1a bis 4a durch ein kartenlesegerät wobei aufeinander folgende Bewegungsphasen der Karte in dem Kartenlesegerät dargestellt sind;
- Figuren 1a bis 4a:: ein Schnitt jeweils gemäß Schnitt CC der Figuren 1 bis 4, wobei aufeinander folgende Bewegungsphasen der Karte in dem Kartenlesegerät dargestellt sind;
- Figuren 1b bis 4b:: jeweils ein Ausschnitt aus den Figuren 1a und 4a;
- Figur 5a, 5b, 6a, 6b:: eine dreidimensionale Ansicht eines Kontaktsatzes, welcher von einem mit diesem starr und einstückig verbundenen Rahmen umgeben ist.

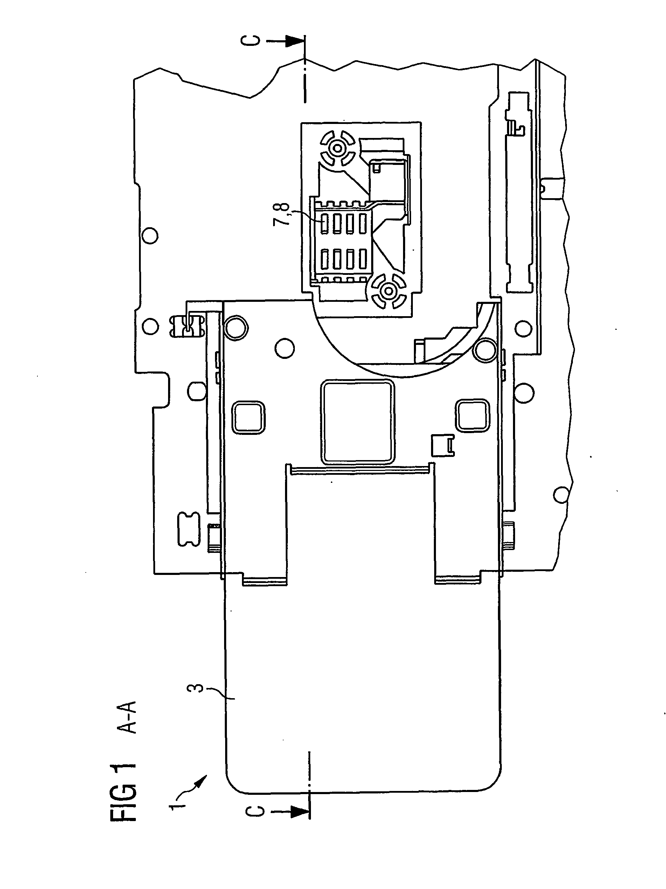

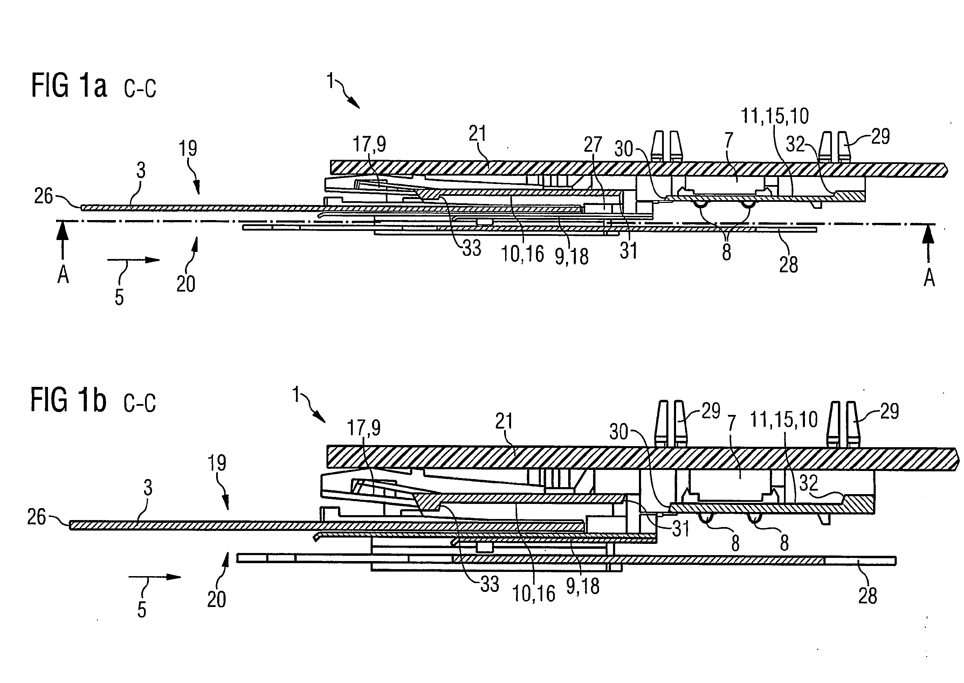

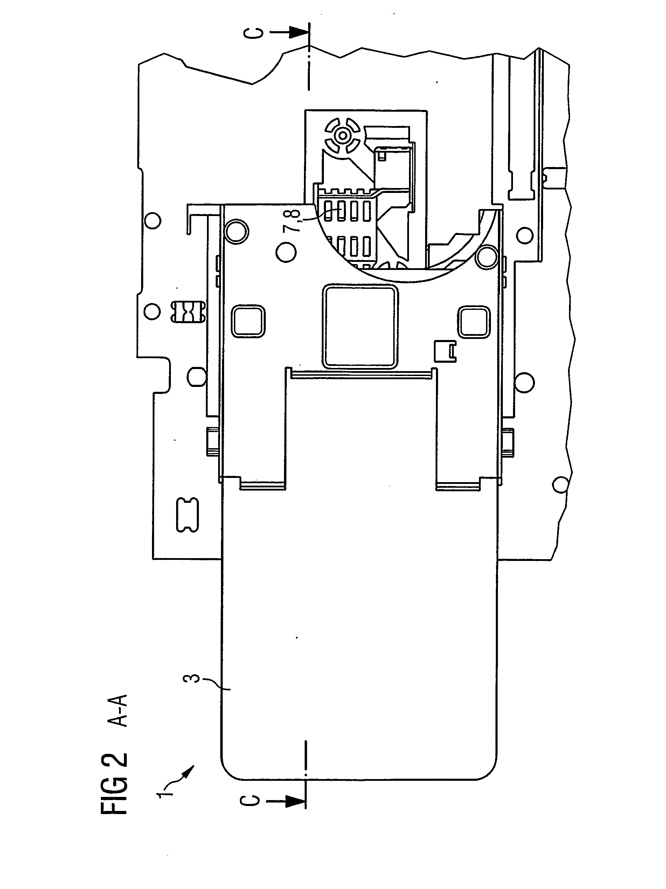

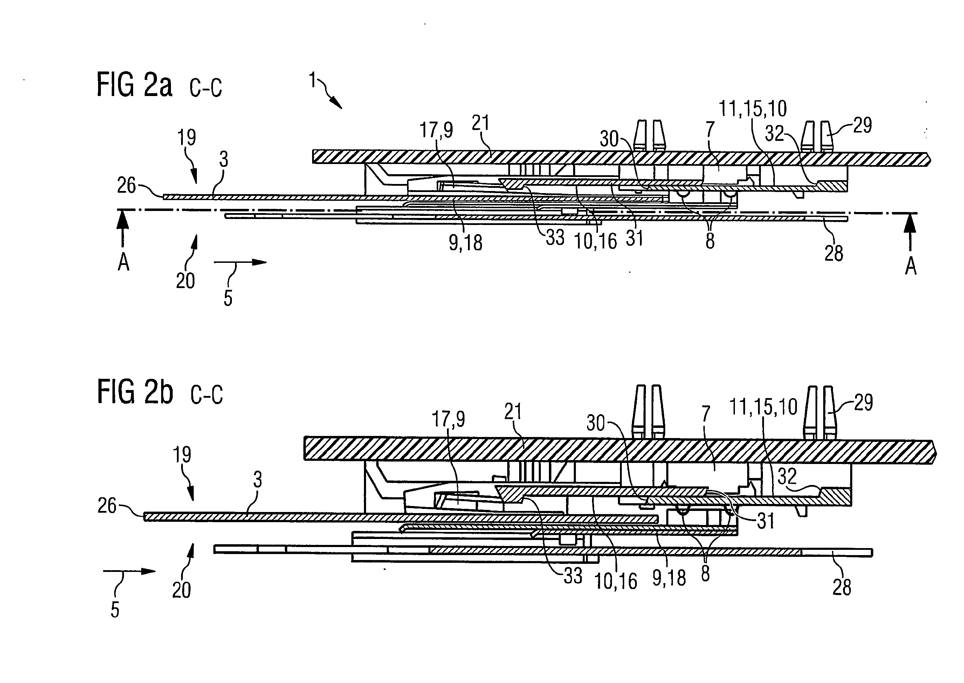

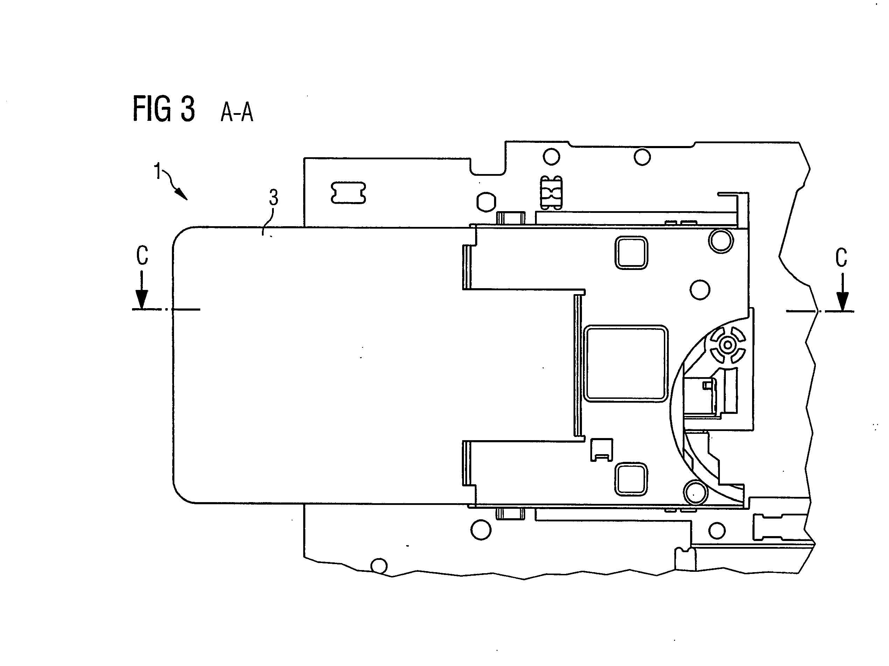

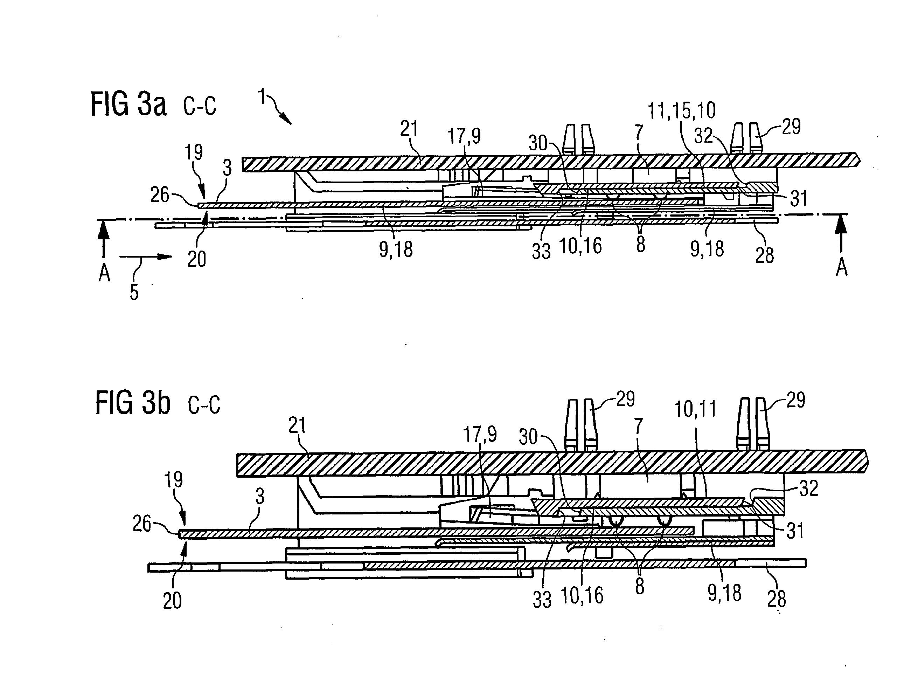

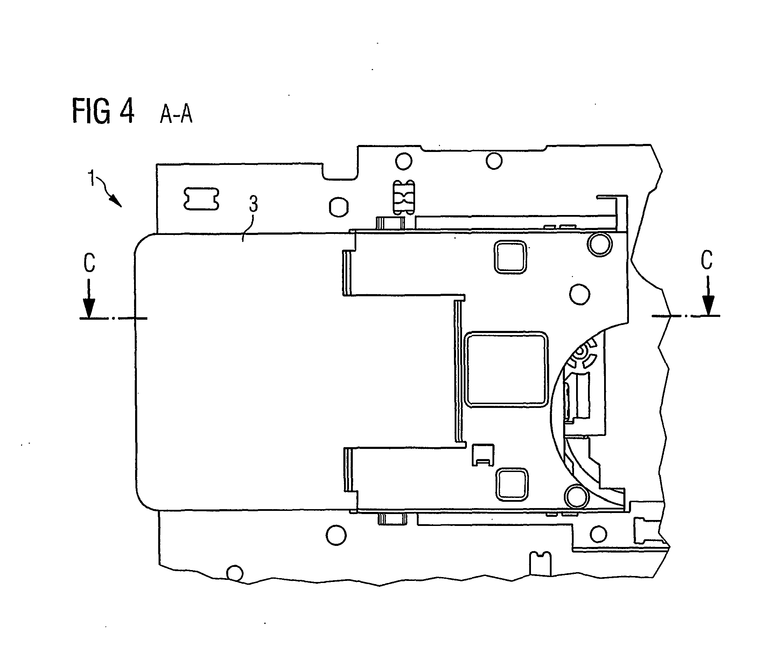

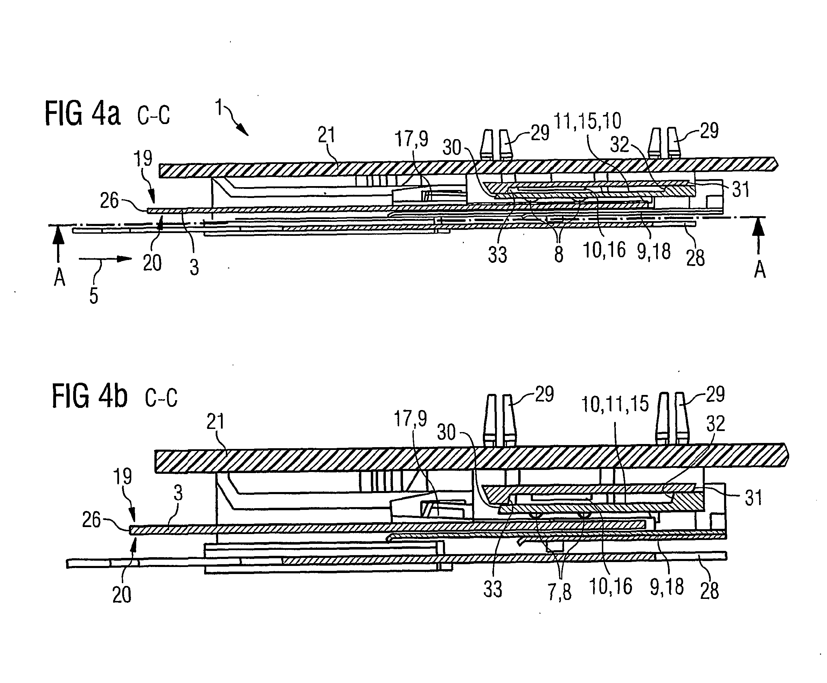

Die Figuren 1 bis 4 bzw. 1a,b bis 4a,b stellen jeweils ein Kartenlesegerät 1 mit einer Karte 3 in unterschiedlichen Phasen des Einschiebens, beziehungsweise Einziehens der Karte 3 dar. In Figur 1 bzw. 1a ist die Karte durch einen nicht dargestellten Einschub in das Kartenlesegerät 1 eingeführt worden. In Figur 2 bzw. 2a hat ein Mitnehmer 9 die eingeführte Karte 3 mittels eines oberen Klemmteils 17 und eines unteren Klemmteils 18 kraftschlüssig erfasst. In Figur 3 bzw. 3a befindet sich die Karte 3 in einer Zwischenphase während des Transports durch das Kartenlesegerät 1 auf dem Weg in die Ausleseposition, welche in Figur 4 bzw. 4a dargestellt ist.

Wesentliche Bauteile des Kartenlesegeräts 1 sind eine Leiterplatte 21, der Mitnehmer 9, ein Kontaktsatz 7 und ein den Kontaktsatz umgebender Rahmen 14 sowie ein alles tragender Grundträger 28.

Die Karte 3 wird durch einen nicht dargestellten Einschub in Einschubrichtung 5 in das Kartenlesegerät 1 eingeführt. Beim Einführen gleitet die Karte 3 zwischen das obere Klemmteil 17 und das untere Klemmteil 18, welche Bestandteile des Mitnehmers 9 sind. Das obere Klemmteil 17 ist drehbar in einer ersten Drehachse 27 an dem unteren Klemmteil 18 angebracht. Während das obere Klemmteil 17 im Rahmen der in Figur 1 bzw. 1a dargestellten Klemmbewegung eine Rotationsbewegung vollzieht, bewegt sich das untere Klemmteil 18 ausschließlich translatorisch. Das untere Klemmteil 18 ist in der Art eines Schlittens sowohl in der Höhe als auch seitlich in nicht näher dargestellter Weise geführt.

Der Kontaktsatz 7 ist mit dem angespritzten Rahmen 14 aus Kunststoff einstückig verbunden und an der Leiterplatte 21 elektrisch kontaktiert. Zusätzlich ist der Kontaktsatz 7 mittels des Rahmens 14 an der Leiterplatte 21 mittels an dem Rahmen 14 angeordneten Klipsverbindungen 29 an der Leiterplatte 21 befestigt. In dem Kontaktsatz 7 sind acht Kontakte 8 zusammengefasst, welche federnd aus dem Kontaktsatz 7 in Abstandsrichtung zu der Karte 3 herausragen. Der Federweg der einzelnen Kontakte 8 beträgt etwa 0,6 mm. Der Mitnehmer 9 weist erste Führungselemente 11 auf, welche mit zweiten Führungselementen 12 an dem Rahmen 14 des Kontaktsatzes 7 gemeinsam in der Art einer Führung 10 zusammenwirken. Das erste Führungselement 11 ist ebenso wie das zweite Führungselement 12 mit jeweils einer ersten schrägen Ebene 30, 31 und einer zweiten schrägen Ebene 32, 33 versehen, welche sich in den verschiedenen Phasen des in Abstandsrichtung 13 zu den Kontakten 8 erfolgenden Kartentransports jeweils in Überdeckung befinden und kulissenartig in der Weise zusammenwirken, dass sich der Mitnehmer 9 in Abstandsrichtung 13 zu den Kontakten 8 des Kontaktsatzes 7 bewegt. Das erste Führungselement 11 und das zweite Führungselement 12 weisen jeweils zu diesem Zweck eine erste Gleitfläche 15 bzw. eine zweite Gleitfläche 16 auf, welche in der Art eines Gleitlagers aneinander vorbei gleiten und so die Karte 3 in Abstandsrichtung 13 zwangsweise führen. Die ersten schrägen Ebenen 30, 31 gewährleisten ein korrektes Aufeinandergleiten der ersten Gleitfläche 15 und der zweiten Gleitfläche 16 des ersten Führungselementes 11 bzw. zweiten Führungselementes 12 bei erstmaliger Überdeckung während des Einzuges der Karte 3. Gleichzeitig wird der Mitnehmer 9 mit der Karte 3 in Abstandsrichtung 13 an die Kontakte 8 des Kontaktsatzes 7 angenähert und die Karte 3 an einer ersten Flachseite 19 und einer zweiten Flachseite 20 von dem oberen Klemmteil 17 und dem unteren Klemmteil 18 berührt und geklemmt. Der Mitnehmer 9 wird von einem nicht dargestellten Antrieb in Einschubrichtung 5 bewegt. Im weiteren Verlauf des Einziehens der Karte 3 gleiten die Gleitflächen 15, 16, wie in Figur 2, 2a dargestellt, übereinander. Es findet eine kontinuierliche Annäherung zwischen dem Mitnehmer 9 bzw. der Karte 3 und den Kontakten 8 des Kontaktsatzes 7 in Abstandsrichtung 13 statt. In der in Figur 3 bzw. 3a dargestellten Phase des Transports der Karte 3 in dem Kartenlesegerät 1 wird die Klemmung der Karte 3 aufgehoben und nicht dargestellte Transportelemente am einschubseitigen Ende der Karte 3 übernehmen den Vorschub der Karte 3 in Richtung des Kontaktsatzes 7. Diese nicht dargestellten Transportelemente sind Teil eines ebenfalls nicht dargestellten Verschließmodules, welches den Einschub des Kartenlesegerätes 1 während der Lese- und Schreibvorgänge verschließt. In der in den Figuren 4, 4a dargestellten Transportphase der Karte 3 sind die zweiten schrägen Ebenen 32, 33 der ersten Gleitfläche 15 bzw. zweiten Gleitfläche 16 des ersten Führungselementes 11 bzw. zweiten Führungselementes 12 der Führung 10 übereinander geglitten, so dass die kulissenartige Führung 10 die Karte 3 in die endgültige Abstandsposition zu den Kontakten 8 des Kontaktsatzes 7 gebracht hat und Schreib- bzw. Lesevorgänge stattfinden können. Der Vorschub wird hierbei mittels Druck an der eingangsseitigen Schmalkante 26 der Karte 3 erzeugt.

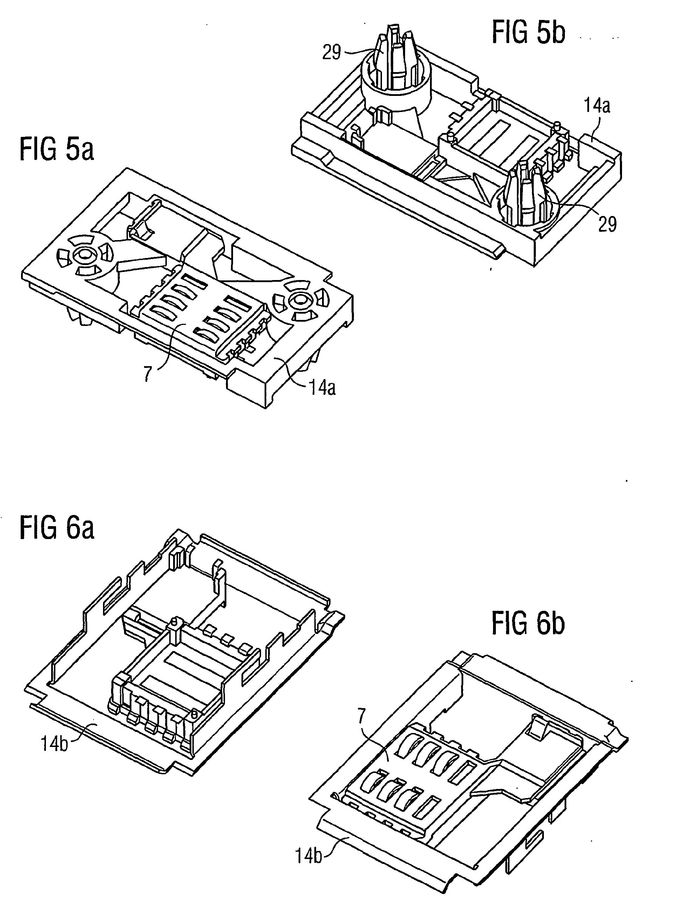

In den Figuren 5a, 5b, 6a, 6b ist jeweils ein Kontaktsatz 7 mit einem den Kontaktsatz 7 umgebenden Rahmen 14a bzw. 14b dargestellt, wobei der Rahmen 14a aus Kunststoff besteht und an den Kontaktsatz angespritzt ist und der Rahmen 14b aus Blech gefertigt ist.

## Patentansprüche

1. Verfahren zum Transport einer Karte (3) in einem Kartenlesegerät (1), bei welchem
- die Karte (3) beim Einschieben durch eine Einschuböffnung in das Kartenlesegerät (1) in einen Mitnehmer (9) gleitet,
- ein Antrieb den Mitnehmer (9) in dem Kartenlesegerät (1) in Einschubrichtung bewegt,
- der Mitnehmer (9) die Karte (3) bei der Bewegung in Einschubrichtung mittels eines auf einer ersten Flachseite (19) der Karte (3) bei Klemmung anliegenden oberen Klemmteils (17) und eines auf der einer zweiten Flachseite (20) der Karte (3) bei Klemmung anliegenden unteren Klemmteils (18) zumindest zeitweise einklemmt,
- eine Führung mit einem ersten Führungselement (11), welches mit dem Kontaktsatz (7) starr verbunden ist, im Zusammenwirken mit einem zweiten Führungselement (11) an dem Mitnehmer (9), welches mit dem ersten Führungselement (11) korrespondiert, den Mitnehmer (9) in Abstandsrichtung zu den Kontakten (8) des Kontaktsatzes (7) bei Bewegung in Einschubrichtung führt,
- die Karte (3) mit Kontakten (8) des Kontaktsatzes (7) kontaktiert wird,
- die Klemmung der Karte (3) mittels des Mitnehmers (9) vor dem Kontaktieren der Karte (3) mit den Kontakten (8) gelöst wird,
- ein Verschließmodul die Einschuböffnung mittels eines Verschlusses verschließt,
- das Verschließmodul die Karte (3) an einer dem Verschließmodul zugewandten Schmalkante (26) berührt und in die Ausleseposition schiebt.

## Claims

1. Method for transporting a card (3) in a card reading device (1), in which
- the card (3) slides in a driver (9) when it is inserted through an insertion opening into the card reading device (1),
- a drive moves the driver (9) in the card reading device (1) in the insertion direction,
- the driver (9) clamps the card (3), at least temporarily, in the event of a movement in the insertion direction, by means of an upper clamping part (17), which bears on a first flat side (19) of the card (3) during clamping, and a lower clamping part (18), which bears on the one second flat side (20) of the card (3) during clamping,
- a guide having a first guide element (11), which is rigidly connected to the contact array (7), whilst interacting with a second guide element (11) on the driver (9), which corresponds to the first guide element (11), guides the driver (9) in the distancing direction in relation to the contacts (8) of the contact array (7) in the event of a movement in the insertion direction,
- contact is made with the card (3) by contacts (8) of the contact array (7),
- the clamping of the card (3) by means of the driver (9) is released prior to contact being made with the card (3) by the contacts (8),
- a closure module closes the insertion opening by means of a closure,
- the closure module comes into contact with the card (3) at a narrow edge (26) facing the closure module and pushes it into the read position.

## Revendications

1. Procédé permettant de transporter une carte (3) dans un lecteur de cartes (1), au cours duquel,
- lorsque la carte (3) est introduite dans le lecteur de cartes (1) à travers une ouverture d'insertion, la carte glisse dans un entraîneur (9),
- une commande déplace l'entraîneur (9) dans le lecteur de cartes (1) dans la direction d'insertion,
- l'entraîneur (9) serre au moins temporairement la carte (3) lors du déplacement dans la direction d'insertion au moyen d'une pièce de serrage supérieure (17) s'appliquant, dans la position serrée, sur une première face plane (19) de la carte (3) et d'une pièce de serrage inférieure (18) s'appliquant, dans la position serrée, sur une deuxième face plane (20) de la carte (3),
- un système de guidage comportant un premier organe de guidage (11), qui est lié d'une façon rigide au jeu de contacts (7), conduit l'entraîneur (9), en concourant avec un deuxième organe de guidage (11) sur l'entraîneur (9), lequel correspond au premier organe de guidage (11), dans la direction des contacts (8) du jeu de contacts (7) lors d'un mouvement dans la direction d'insertion,
- la carte (3) est mise en contact électrique avec les contacts (8) du jeu de contact (7),
- le serrage de la carte (3) est dégagé au moyen de l'entraîneur (9) avant la mise en contact électrique de la carte (3) avec les contacts (8),
- un module d'obturation ferme l'ouverture d'insertion au moyen d'un obturateur,
- le module d'obturation entre en contact avec la carte (3) sur une arête étroite (26) tournée vers le module d'obturation et la pousse dans la position de lecture.
